# EUROPÄISCHE PATENTSCHRIFT

(11) **EP 3 575 073 B1**
(45) Veröffentlichungstag und Bekanntmachung des Hinweises auf die Patenterteilung: **09.08.2023**
(21) Anmeldenummer: 19176754.0
(22) Anmeldetag: 27.05.2019
(51) Int. Cl.: B30B 9/30, A01F 15/04, A01F 15/08

(54) **BALLENAUSSTOSSEINRICHTUNG UND BALLENPRESSE**
BALE OUTPUT DEVICE AND BALE PRESS
DISPOSITIF D'ÉJECTION DES BALLES ET PRESSE À BALLES

(30) Priorität: 29.05.2018 DE 102018208442
(43) Veröffentlichungstag der Anmeldung: 04.12.2019
(73) Patentinhaber: Deere & Company, Moline, IL 61265 (US)
(72) Erfinder: Pegon, Pascal, 68163 Mannheim (DE)
(74) Vertreter: Stein, Stefan

(56) Entgegenhaltungen:
- EP-A1- 0 000 881
- EP-A1- 2 636 298
- EP-A1- 3 014 979
- WO-A1-2014/144691
- DE-A1- 1 752 111
- DE-A1- 19 644 574
- US-A- 5 007 337
- US-E- R E29 278

## Beschreibung

Die vorliegende Erfindung betrifft eine Ballenausstoßeinrichtung für eine Ballenpresse zur Bildung von Pressballen in einem quaderförmigen Pressraum, in dem ein Presskolben mit einer dem Pressballen zugewandten Pressfläche beweglich aufgenommen wird, und eine Ballenpresse zur Bildung von Pressballen in einem quaderförmigen Pressraum, in dem ein Presskolben beweglich aufgenommen wird.

Bekannte Ballenausstoßeinrichtungen werden an Ballenpressen mit einem quaderförmigen Pressraum eingesetzt, um dazu beizutragen, einen in dem Pressraum der Ballenpresse gebildeten Pressballen in der Art eines Quaderballens aus dem Pressraum hinaus zu transportieren. Dies kann insbesondere dann wünschenswert sein, wenn der Pressraum nach Beendigung des Ernteeinsatzes vollständig entleert werden soll. Hierzu sind üblicherweise in dem Pressraum verschiebliche Fördermittel vorgesehen, die in den Pressballen von oben und/oder von den Seiten eingreifen können, um ihn in Richtung einer Auswurföffnung zu transportieren. Derartige Ballenausstoßeinrichtungen werden sowohl im landwirtschaftlichen als auch im industriellen Bereich an Ballenpressen mit quaderförmigem Pressraum eingesetzt. Entsprechende landwirtschaftliche Pressen dienen beispielsweise zur Bildung von Erntegutballen aus Erntegut, beispielsweise in der Art von Stroh, Heu, Häckselgut etc. Industrielle Pressen finden Verwendung bei der Verdichtung von Müll, Textilien oder anderen Stoffen bzw. bei deren Pressung zu Ballen. Bei bekannten Ballenausstoßeinrichtungen kann es insbesondere bei schwierigen Erntebedingungen vorkommen, dass der Pressballen nicht optimal aus dem Pressraum ausgestoßen wird. US 5,007,337 offenbart eine horizontale Abfallmaterial-Ballenpresse die als Ballenausstoßeinrichtung einen Auswurfkolben aufweist, der in einem Entladungskanal angeordnet ist, wobei der Entladungskanal im rechten Winkel zum Beschickungskanal angeordnet ist. EP 3 014 979 A1 offenbart eine Ballenpresse mit einer Ballenausstoßeinrichtung, die eine Zylinder umfasst, der in einem rechten Winkel zum Beschickungskanal angeordnet ist.

Die der Erfindung zugrunde liegende Aufgabe wird daher darin gesehen, eine Ballenausstoßeinrichtung und eine Ballenpresse vorzusehen, durch welche die vorgenannten Nachteile überwunden werden.

Die Aufgabe wird erfindungsgemäß durch die Lehre der Patentansprüche 1 bzw. 7 gelöst. Weitere vorteilhafte Ausgestaltungen und Weiterbildungen der Erfindung gehen aus den Unteransprüchen hervor.

Diesbezüglich weist eine Ballenausstoßeinrichtung für eine Ballenpresse zur Bildung von Pressballen in einem quaderförmigen Pressraum, in dem ein Presskolben mit einer dem Pressballen zugewandten Pressfläche beweglich aufgenommen wird, wenigstens einen Auswurfstößel auf, der selektiv wenigstens eine Stellung einnehmen kann, in der er über die Pressfläche hinausragt. Nimmt der Auswurfstößel diese Stellung ein, vergrößert dies selektiv bzw. temporär den Hub des Presskolbens. Auf diese Weise kann der Pressballen, insbesondere ein vollständig gebundener Pressballen oder auch ein nur teilweise fertiggestellter Pressballen, der im Folgenden auch als Stapel bezeichnet wird, weiter in Richtung einer Auswurföffnung des Pressraums bzw. einer Ablagevorrichtung gefördert werden, als dies durch einen konventionellen Presskolben erreicht werden.

Ist der Auswurfstößel in dem Presskolben bzw. einem Presskörper des Presskolbens angeordnet, so erfordert er keinen zusätzlichen Bauraum. Ist der Auswurfstößel darüber hinaus oder auch zusätzlich vorzugsweise einenends, insbesondere aber stationär an dem Presskörper bzw. dem Presskolben gelagert, so vereinfacht dies die Lagerung des Auswurfstößels und/oder der Auswurfstößel kann sich zusammen mit dem Presskolben derart bewegen, dass der Presskolben zur Erzielung eines möglichst großen Hubs vorzugsweise eine bezogen auf den Pressraum ausgefahrenen Stellung einnehmen kann, wenn der Auswurfstößel über die Pressfläche hinausragt.

Besonders vorteilhaft ist es, wenn der Auswurfstößel insbesondere mit Bezug auf den Presskolben zumindest bereichsweise translatorisch bzw. teleskopisch bewegbar vorgesehen ist.

Weist die Pressfläche wenigstens zwei Segmente aufweist, so kann dies einen modularen Aufbau des Presskolbens begünstigen. Sind diese durch sich zumindest im Wesentlichen vertikal erstreckende Schlitze beabstandet, können in diese Schlitze insbesondere bewegliche Bauteile der Ballenpresse, wie beispielsweise Nadeln eines Nadel- bzw. Bindezusammenbaus der Ballenpresse eingreifen, um einen Pressballen mit einem Bindematerial, wie beispielsweise einer Schnur oder einem ähnlichen Material zu binden.

Weist die Pressfläche bzw. wenigstens eines der Segmente einen beweglichen Abschnitt auf, so kann dieser mit dem Auswurfstößel derart wirksam verbunden sein, dass sich der Abschnitt zusammen mit dem Auswurfstößel bewegt bzw. der Abschnitt durch den Auswurfstößel bewegt wird, insbesondere derart, dass der Abschnitt in eine Stellung gebracht werden kann, in der er über die Pressfläche als solche hinausragt.

Es ist denkbar, dass die Ballenausstoßeinrichtung manuell betätigt werden kann. Besonders günstig ist es aber, wenn wenigstens ein Auswurfmotor, insbesondere ein, vorzugsweise einen Zylinder und einen in dem Zylinder beweglichen Auswurfkolben aufweisender Hydraulikmotor, vorgesehen ist, der vorzugsweise direkt oder indirekt mit dem Auswurfstößel zusammenwirkt.

Besonders vorteilhaft ist es, wenn eine Ballenpresse zur Bildung von Pressballen in einem quaderförmigen Pressraum in dem ein Presskolben beweglich aufgenommen wird, eine derartige Ballenausstoßeinrichtung aufweist. Bei der Ballenpresse handelt es sich insbesondere um eine landwirtschaftliche Ballenpresse zur Bildung von Quaderballen. Die Presse kann aber auch im industriellen Bereich, beispielsweise zur Bildung von Ballen aus Papier, Müll, Stoff oder anderen Materialien eingesetzt werden.

Anhand der Zeichnung, die ein Ausführungsbeispiel der Erfindung zeigt, werden nachfolgend die Erfindung sowie weitere Vorteile und vorteilhafte Weiterbildungen der Erfindung und Ausgestaltungen der Erfindung näher beschrieben und erläutert.

Es zeigt:
- Fig. 1: eine Seitenansicht einer Ballenpresse zur Bildung von Pressballen in einem quaderförmigen Pressraum,
- Fig. 2: eine vergrößerte Darstellung eines Presskolbens der Ballenpresse mit einer Ballenausstoßeinrichtung und die
- Fig. 3a-d: schematisch den Presskolben und die Ballenausstoßeinrichtung in unterschiedlichen Positionen.

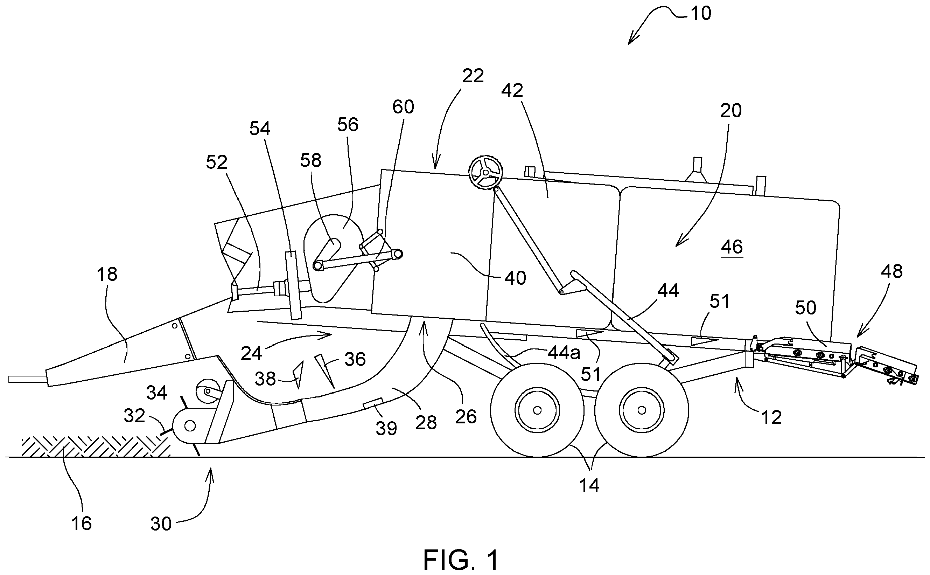

Die Fig. 1 zeigt eine Ballenpresse 10 zum Herstellen quaderförmiger Pressballen mit einem Rahmen 12, der sich über Rädern 14 in Tandemanordnung auf dem Boden 16 abstützt. An den Rahmen 12 ist eine Deichsel 18 angeschlossen, welche sich von diesem aus nach vorn erstreckt und so ausgebildet ist, dass sie an ein nicht gezeigtes Arbeitsfahrzeug, beispielsweise einen Ackerschlepper angeschlossen werden kann. Die Ballenpresse 10 weist einen Pressraum 20 in Form einer Kammer von rechteckförmigem Querschnitt auf, der von einem Gehäuse 22 gebildet. Das Gehäuse 22 ist in einem unteren Bereich 24 mit einem Guteinlass 26 versehen, an den ein gekrümmter Zufuhrkanal 28 angeschlossen ist.

Darüber hinaus ist eine Erntegutaufnahmevorrichtung 30 in Form eines Aufnehmers 32 mit einem zugeordneten Niederhalter 34, eine Verdichtergabel 36 und eine Ladegabel 38 vorgesehen. Die Erntegutaufnahmevorrichtung 30 ist vor dem Zufuhrkanal 28 angeordnet, um Erntegut vom Boden aufzunehmen und es an die Verdichtergabel 36 abzugeben, die dazu dient, das Erntegut in dem Zufuhrkanal 28 zu verdichten, bis sich eine Ladung von vorgewählter Dichte in dem Zufuhrkanal 28 angesammelt hat und mittels der Ladegabel 38 über den Guteinlass 26 in den Pressraum 20 hineingestopft wird. An einer vorderen unteren Stelle des Zufuhrkanals 28 ist eine federbelastete Klappe 39 schwenkbar montiert, die in Abhängigkeit von der Dichte des in dem Zufuhrkanal 28 befindlichen Erntegutes schwenkt und anzeigt, sobald eine gewünschte Pressgutdichte in dem Zufuhrkanal 28 erreicht ist, so dass die Ladegabel 38 aktiviert wird, um eine Portion Erntegut in den Pressraum 20 zu bewegen.

Wenn die Ladung des Ernteguts in den Pressraum 20 eingebracht wurde, wird ein Presskolben 40 mittels eines geeigneten Antriebs in einer gesteuerten Reihenfolge zeitlich nach der Ladegabel 38 betätigt, um das Erntegut nach hinten in den Pressraum 20 zu bewegen, wo es in einem Stapel 42 verdichtet wird. Nachdem der Stapel 42 von verdichtetem Material eine vorgewählte Länge erreicht hat, wird ein Nadelzusammenbau 44 zum Liefern von Bindegarn, der mehrere gekrümmte Nadeln 44a enthält, betätigt, um mehrere Garnstränge einer entsprechenden Anzahl nicht gezeigter Knoter zuzuführen, die so wirken, dass sie Garnlängen um die vorgewählte Länge der Stapel 42 legen, um einen Ballen 46 zu bilden. In einem rückwärtigen Endbereich 48 des Rahmens 12 ist eine Ablagevorrichtung 50 angebracht, über die der Ballen 46 auf dem Boden 16 abgelegt werden kann. Stromaufwärts der Ablagevorrichtung 50 sind darüber in dem unteren Bereich 24 an dem Rahmen Ballenauswurfmittel 51 vorgesehen, welche in bekannter Art und Weise nach oben verschwenkbar und in Längsrichtung des Pressraums 20 verschiebbar angeordnet sind, so dass sie in den Ballen 46 bzw. den Stapel 42 eingreifen können, um diesen in Richtung der Ablagevorrichtung 50 zu fördern, insbesondere dann, wenn der Pressraum 20 nach Abschluss eines Ernteeinsatzes vollständig geleert werden soll.

Der Presskolben 40 ist für eine hin- und hergehende Bewegung in dem Pressraum 20 zwischen einer zurückgezogenen Stellung vor dem Guteinlass 26 und einer (in Fig. 1 gezeigten) teilweise ausgefahrenen Stellung über dem Guteinlass 26 ausgelegt, aus der er sich noch weiter nach hinten bewegen kann, bis er gegen den Stapel 42 bzw. den Ballen 46 stößt und verdichtet wird. Der Antrieb des Presskolbens 40 erfolgt über eine Eingangswelle 52, die beispielsweise durch eine Zapfwelle des nicht gezeigten Arbeitsfahrzeugs angetrieben werden kann. Die Eingangswelle 52 treibt ein Schwungrad 54 und über ein Getriebe 56 eine Kurbel 58 an, deren Bewegung über eine Schubstange 60 an den Presskolben 40 übertragen wird.

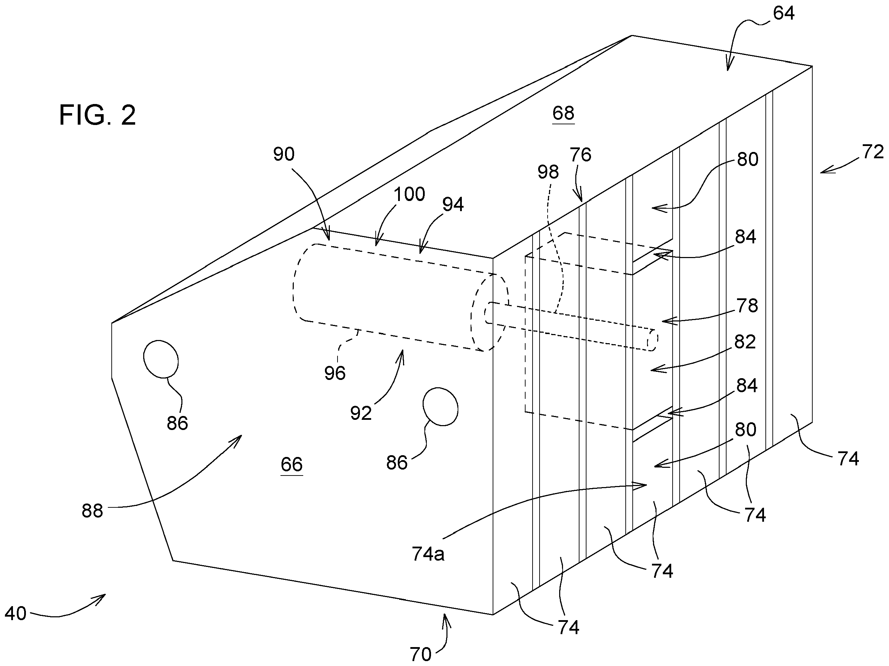

Es wird nun auch auf die Figur 2 Bezug genommen, gemäß der der Presskolben 40 einen Presskörper 64 mit zwei Seitenwänden 66, einer Oberseite 68, einer Unterseite 70 und einer im Betrieb dem Ballen 46 zugewandten Pressfläche 72 aufweist. Die Pressfläche 72 wiederum weist mehrere, gemäß dem vorliegenden Ausführungsbeispiel sechs Segmente 74 auf, welche durch horizontale Schlitze 76 beabstandet sind, in die während der Bindung des Ballens 46 die Nadeln 44a des Nadelzusammenbaus 44 eingreifen können.

Eines der Segmente 74, das im Folgenden als Segment 74a bezeichnet werden wird und in einem mittleren Bereich 78 der Pressfläche 72 angeordnet ist, ist darüber hinaus horizontal geteilt ausgebildet und weist zwei äußere und bezogen auf die übrigen Segmente 74 bzw. den Presskörper 64 stationäre Abschnitte 80 und einen mittleren, beweglichen Abschnitt 82 auf, wobei die Abschnitten 80 und der bewegliche Abschnitt 82 durch Fugen 84 beabstandet sind. An den Seitenwänden 66 sind jeweils dem Pressraum 20 zugewandte Führungselemente 86 vorgesehen, mittels denen der Presskolben 40 in dem Pressraum 20 horizontal geführt wird.

Darüber hinaus ist eine Ballenausstoßeinrichtung 88 mit einem in einem Innenbereich 90 des Presskörpers 64 angeordneten Auswurfstößel 92 vorgesehen, wobei der Auswurfstößel 92 einenends an dem beweglichen Abschnitt 82 und andernends an dem Presskörper 64 angreift. Der Auswurfstößel 92 ist teleskopisch ausfahrbar ausgebildet und weist hierzu einen, in der Art eines Hydraulikmotors 94 mit einen Zylinder 96 und einen in dem Zylinder 96 beweglichen Auswurfkolben 98 ausgebildeten Auswurfmotor 100 auf.

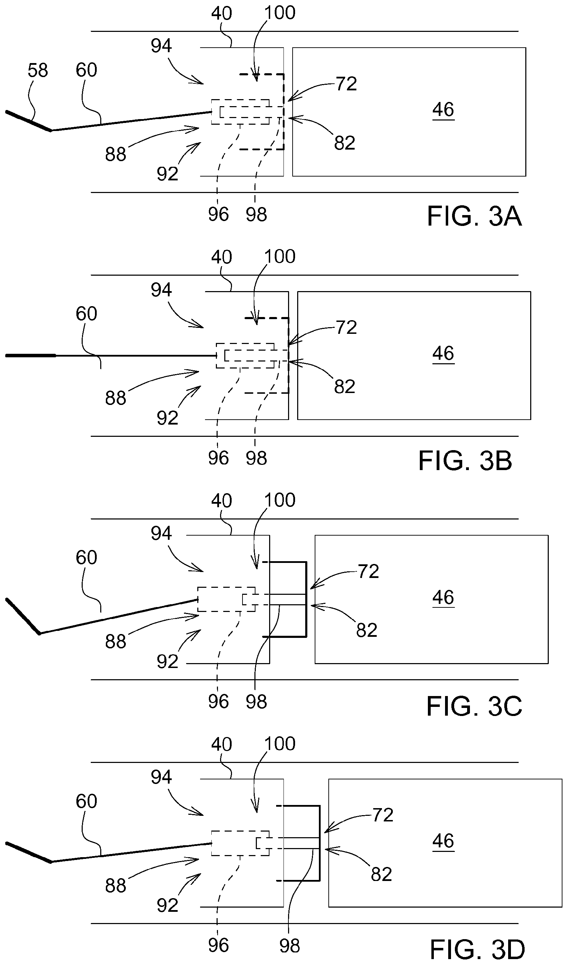

Es wird nun auch auf die Figuren 3a bis d Bezug genommen, in denen der Presskolben 40 und der Auswurfstößel 92 stark vereinfacht in unterschiedlichen Positionen gezeigt werden, wobei die Figur 3a den Presskolben 40 kurz vor Beendigung eines Presshubs zeigt, aus der er im Anschluss zur Verdichtung des Pressballens 46 bzw. des Stapels 42 in die in Figur 3b gezeigte, voll ausgefahrene Stellung gebracht wird. Soll der Pressballen 46 und/oder der noch nicht zu einem Pressballen 46 gebundene Stapel 42 aus dem Pressraum 20 ausgestoßen werden, so wird der Presskolben 40 aus dieser vollständig ausgefahrenen Stellung zurück in seine eingefahrene Stellung gebracht, wobei der Auswurfmotor 100 beispielsweise manuell oder auch automatisch über eine nicht gezeigte Steuerungseinrichtung der Ballenpresse 10 derart angesteuert bzw. mit Hydraulikdruck beaufschlagt wird, dass der Auswurfkolben 98 mit Bezug auf den Zylinder 96 ausfährt und somit der Auswurfstößel 92 und mit diesem der bewegliche Abschnitt 82 des Segments 74a über die Pressfläche 72 hinausragt (Figur 3c). Auf diese Weise wird der Hub des Presskolbens 40

im nächsten Bewegungszyklus vergrößert, so dass der Pressballen 46 bzw. der Stapel 42 weiter in Richtung der Ablagevorrichtung 50 gefördert werden kann (Figur 3d). Dies kann fakultativ durch die Wirkung der Auswurfmittel 51 unterstützt werden.

## Patentansprüche

1. Ballenpresse zur Bildung von Pressballen (46), wobei die Ballenpresse einen quaderförmigen Pressraum (20) umfasst, in dem ein Presskolben (40) mit einer dem Pressballen (46) zugewandten Pressfläche (72) beweglich aufgenommen wird, wobei die Ballenpresse (10) eine Ballenausstoßeinrichtung (88) aufweist, und die Ballenausstoßeinrichtung (88) wenigstens einen Auswurfstößel (92) aufweist, der selektiv wenigstens eine Stellung einnehmen kann, in der er über die Pressfläche (72) hinausragt, und der Auswurfstößel (92) einenends an dem Presskolben (40) gelagert ist, wobei der Auswurfstößel (92) zusammen mit dem Presskolben (40) derart bewegbar ist, dass der Presskolben (40) zur Erzielung eines möglichst großen Hubs eine bezogen auf den Pressraum ausgefahrenen Stellung einnimmt, wenn der Auswurfstößel über die Pressfläche hinausragt,
**dadurch gekennzeichnet, dass**
der Auswurfstößel (92) in dem Presskolben (40) bzw. einem Presskörper (64) des Presskolbens (40) angeordnet ist.

2. Ballenpresse nach Anspruch 1, **dadurch gekennzeichnet, dass** der Auswurfstößel (92) insbesondere mit Bezug auf den Presskolben (40) zumindest bereichsweise translatorisch bzw. teleskopisch bewegbar vorgesehen ist.

3. Ballenpresse nach einem der vorherigen Ansprüche, **dadurch gekennzeichnet, dass** die Pressfläche (72) wenigstens zwei, vorzugsweise durch sich zumindest im Wesentlichen vertikal erstreckende Schlitze (76) beabstandete Segmente (74, 74a) aufweist.

4. Ballenpresse nach einem der vorherigen Ansprüche, **dadurch gekennzeichnet, dass** die Pressfläche (72) bzw. wenigstens eines der Segmente (74a) einen beweglichen Abschnitt (82) aufweist, der mit dem Auswurfstößel (92) wirksam verbunden ist.

5. Ballenpresse nach einem der vorherigen Ansprüche, **dadurch gekennzeichnet, dass** wenigstens ein Auswurfmotor (100), insbesondere ein vorzugsweise einen Zylinder (96) und einen in dem Zylinder (96) beweglichen Auswurfkolben (98) aufweisender Hydraulikmotor (94), vorgesehen ist, der vorzugsweise direkt oder indirekt mit dem Auswurfstößel (92) zusammenwirkt.

## Claims

1. Baler for forming compressed bales (46), wherein the baler comprises a cuboidal compression chamber (20) in which a compression plunger (40) with a compression surface (72) facing towards the compressed bale (46) is accommodated in a movable manner, wherein the baler (10) has a bale-ejection device (88), and the bale-ejection device (88) has at least one discharge pusher (92) which can selectively assume at least one position in which it protrudes beyond the compression surface (72), and the discharge pusher (92) is mounted at one end on the compression plunger (40), wherein the discharge pusher (92) is movable together with the compression plunger (40) in such a way that, for achieving the greatest possible travel, the compression plunger (40) assumes a position in which it is extended in relation to the compression chamber when the discharge pusher (92) protrudes beyond the compression surface,
**characterized in that**
the discharge pusher (92) is arranged in the compression plunger (40) or a compression body (64) of the compression plunger (40).

2. Baler according to Claim 1, **characterized in that** the discharge pusher (92) is provided so as to be at least regionally translationally or telescopically movable, in particular in relation to the compression plunger (40).

3. Baler according to either of the preceding claims, **characterized in that** the compression surface (72) has at least two segments (74, 74a) which are preferably spaced apart by slots (76) which extend at least substantially vertically.

4. Baler according to one of the preceding claims, **characterized in that** the compression surface (72) or at least one of the segments (74a) has a movable portion (82) which is operatively connected to the discharge pusher (92).

5. Baler according to one of the preceding claims, **characterized in that** provision is made of at least one discharge motor (100), in particular a hydraulic motor (94) preferably having a cylinder (96) and a discharge plunger (98) which is movable in the cylinder (96), which discharge motor preferably interacts directly or indirectly with the discharge pusher (92).

## Revendications

1. Presse à balles pour la formation de balles pressées (46), la presse à balles comprenant une chambre de pressage (20) de forme parallélépipédique, dans laquelle un piston de pressage (40) est reçu de manière mobile avec une surface de pressage (72) tournée vers la balle pressée (46), la presse à balles (10) présentant un dispositif d'éjection de balle (88), et le dispositif d'éjection de balle (88) présentant au moins un poussoir d'évacuation (92), qui peut prendre sélectivement au moins une position dans laquelle il dépasse de la surface de pressage (72), et le poussoir d'évacuation (92) étant monté à une extrémité sur le piston de pressage (40), le poussoir d'évacuation (92) pouvant être déplacé conjointement avec le piston de pressage (40) de telle sorte que le piston de pressage (40), pour obtenir une course aussi grande que possible, prend une position sortie par rapport à la chambre de pressage lorsque le poussoir d'évacuation dépasse de la surface de pressage, **caractérisée en ce que**
le poussoir d'évacuation (92) est agencé dans le piston de pressage (40) ou un corps de pressage (64) du piston de pressage (40).

2. Presse à balles selon la revendication 1, **caractérisée en ce que** le poussoir d'évacuation (92) est prévue pour être mobile en translation ou de manière télescopique au moins par zones, notamment par rapport au piston de pressage (40).

3. Presse à balles selon l'une quelconque des revendications précédentes, **caractérisée en ce que** la surface de pressage (72) présente au moins deux segments (74, 74a) espacés, de préférence par des fentes (76) s'étendant au moins essentiellement verticalement.

4. Presse à balles selon l'une quelconque des revendications précédentes, **caractérisée en ce que** la surface de pressage (72) ou au moins l'un des segments (74a) présente une section mobile (82) qui est reliée de manière opérationnelle au poussoir d'évacuation (92).

5. Presse à balles selon l'une quelconque des revendications précédentes, **caractérisée en ce qu'**au moins un moteur d'évacuation (100) est prévu, notamment un moteur hydraulique (94) présentant de préférence un cylindre (96) et un piston d'évacuation (98) mobile dans le cylindre (96), qui coopère de préférence directement ou indirectement avec le poussoir d'évacuation (92).
